# EUROPEAN PATENT APPLICATION

(11) **EP 3 045 513 A1**
(43) Date of publication of application: **20.07.2016**
(21) Application number: 15150972.6
(22) Date of filing: 13.01.2015
(51) Int. Cl.: C10G 1/04, C10L 1/02, C10L 1/08, C10G 3/00

(54) **Diesel-soluble lignin oils and methods of their production**

(71) Applicant: Danish Technical University, 2800 Kgs. Lyngby (DK); University of Copenhagen, 1165 Copenhagen K (DK)
(72) Inventor: Bachmann Nielsen, Joachim, 1307 Copenhagen (DK); Jensen, Anders, 2200 Copenhagen N (DK); Degn Jensen, Anker, 4060 Kr. Saaby (DK)
(74) Representative: Orsnes, Henrik Egede

(57) **Abstract**

Comparatively impure lignin-rich solid residual from hydrothermally pretreated lignocellulosic biomass that has been subjected to cellulase enzyme hydrolysis can be directly converted to substantially diesel-soluble lignin oil without requirement for added catalyst or H₂ gas or any pre-extraction or pre-solubilisation of lignin. The lignin residual is subject to solvolysis in ethanol or methanol at temperatures between 370-420 °C for reaction period of between 200 and 280 minutes. Solvent and optionally other light fractions are removed by distillation to yield a heavy liquid fraction termed "product oil" having boiling point greater than 120 °C. The reaction can be advantageously conducted with gradual heating taking at least 30 minutes to heat from room temperature to reaction temperature. O:C ratio of the product oil can be maintained at levels beneath 0.25 with conversion yields of at least 40% where solvolysis reaction parameters are kept within this range of temperature and reaction period, where the ratio of solid starting material to solvent is kept within the range 0.025 and 0.160, and where water content is kept within the range 0.1 and 15% by weight.

## Description

### Field of the invention

The invention relates to lignin-derived oils that are soluble in diesel fuels and methods of their production. In particular, residual lignin from a lignocellulosic biomass refinery process is subject to solvolysis in supercritical ethanol or methanol, without reliance on added catalysts, under conditions sufficient to provide a combustible oil in high yield that is substantially soluble in diesel and marine die-sel oil.

### Background of the invention

Development of technologies for utilisation of plant biomass to replace petroleum as a precursor for fuels and chemical products have recently become commercially attractive. In fact, lignocellulosic biomass processing has become a central focus in ongoing efforts to develop sustainable economies and ameliorate global climate change arising from greenhouse gas emissions.

Utilisation of lignocellulosic biomass in liquid fuels has attracted particular attention. A variety of schemes for this have been proposed. In some systems, whole plant biomass is subject to pyrolysis at temperatures between 500 and 700 °C to produce a combustible bio-oil comprising degradation products derived from lignin, cellulose and hemicellulose. See e.g. Lehto et al. 2014. In other systems, whole plant biomass is extracted in solvents such as water, alcohols or water-alcohol mixtures, typically at supercritical temperature and pressure conditions. See e.g. Aysu et al. 2012; Huang et al. 2013. The extracted, degraded material similarly comprises a combustible liquid fraction. In still other systems, plant biomass is processed using a so-called "biorefinery" approach, which seeks to optimise commercial utilisation of the various different chemical components of the feedstock. The carbohydrate polymers cellulose and hemicellulose are transformed into monomeric sugars which can then be fermented to a variety of different end products such as fuel ethanol or fatty precursors of bio jet-fuel. The lignin component is then recovered as a residual or "waste" product. In cellulosic ethanol biorefineries, which are already commercially viable, fermentable sugars are produced by enzymatic hydrolysis of cellulose and hemicellulose and then fermented to ethanol, which can be used directly as liquid fuel or blended into gasoline. The lignin component is then recovered as a residual, either from enzymatic hydrolysate, from fermentation broth before or directly after distillation of ethanol, or after anaerobic digestion of distillery vinasse.

Lignocellulosic biomass such as agricultural wastes and so-called "fuel grasses" comprise a significant percentage of lignin, typically between 15-35% by weight. Native lignin, which is intricately associated with cellulose and hemicellulose strands, is a complex, hydrophobic, branched, highly cross-linked, amorphous biopolymer formed by oxidative coupling of "lignol" phenyl-propanoid monomers - *p*-coumaryl alcohol, coniferyl alcohol and sinapyl alcohol. Lignin also typically comprises covalently attached carbohydrate moieties. The number-average molecular weight of native lignins typically falls within the range 7500-15000. In cellulosic ethanol biorefineries, the biomass feedstock is typically subject to some form of pretreatment in order to improve accessibility of cellulose strands to productive enzyme binding. Pretreatment typically involves heating to temperatures above 150°C and causes a partial de-polymerisation of lignin such that the number-average molecular weight is reduced to between about 1500 and 8000.

Commercial viability of a cellulosic ethanol biorefinery can turn critically upon the economic value obtained from residual lignin. Simply drying residual lignin and using it as a solid fuel provides a comparatively low value lignin product. Higher value can be obtained where residual lignin is converted into a liquid fuel, particularly where the liquid fuel can be blended into diesel fuels.

Lignin fuels are especially valuable when they are suitable for blending with marine diesel, which comprises a greater percentage of heavy oils. Many countries have imposed restrictions on permissible sulphur remissions from marine transport. Ordinary, low-grade fuel oils typically used in container shipping have high sulphur content, 2% by weight or more. Demand is accordingly increasing for higher quality, low-sulphur marine diesel fuels. Lignin residual from a cellulosic ethanol biorefinery can normally be obtained having very low sulphur content. Liquid fuel derived from such lignin residual can be advantageously used as a low-sulphur blend in marine diesel, analogous to use of fuel ethanol as a blend in gasoline.

Biomass pyrolysis oils and crude liquid fuels derived from lignin can be used as diesel blend fuels through use of emulsifiers, see e.g. Martin et al. 2014, or in some cases co-solvents such as alcohols or tetrahydrofuran, typically used in large quantity see e.g. Alcala and Bridgwater 2013; Yaginuma et al. 2001; WO2013/009419. However, reliance on emulsifiers and co-solvents increases process cost and complexity, especially when used in large quantity. It is commercially advantageous to produce a lignin-derived liquid fuel that is, itself, directly soluble in diesel, and particularly in marine diesel. But this has proved difficult to achieve, especially with lignin residual from a cellulosic ethanol biorefinery. This material is typically less than 75% pure, further comprising salts, residual carbohydrate and so-called "pseudo-lignin" (chemical by-products of pretreatment processes).

De-polymerisation at high temperatures is generally adequate to convert solid residual lignin into a combustible liquid. But in order for lignin-derived liquid fuels to be diesel-soluble, the oxygen content of the product oil in hydroxyl, ether, ketone and aldehyde groups should be substantially reduced compared with the lignin starting material. Reduction of oxygen content is associated with an increase in hydrogen content. Native lignin typically has a molecular O:C (oxygen:carbon) ratio of between 0.50 and 0.75 and an H:C ratio of between 1.1 and 1.3. In order for lignin-derived oils to become substantially soluble in marine diesel, the O:C ratio of the product oil should generally be reduced to levels less than 0.25, or by at least 50% relative to the starting material, and the H:C ratio should generally be increased to greater than 1.5.

In order to achieve substantial de-oxygenation of lignin-derived liquid fuels, it has previously been considered necessary to employ a commercially disadvantageous separate de-oxygenation step or a catalyst added during de-polymerisation. See e.g. WO2010/094697 [formic acid catalyst added to de-polymerisation reaction with lignin residual]; US2012010318 [separate catalytic hydrotreatment step for reduction of oxygen content in heavy pyrolysis bio-oil]; WO2013/135973 [separate multi-stage pressure and heat treatment for de-oxygenation of pyrolysis bio-oil]; US20110119994 [separate catalytic hydrotreatment of pyrolysis bio-oil]; US7578927 [separate catalytic hydrotreatment of pyrolysis bio-oil].

One approach to de-polymerisation is solvolysis of residual lignin in supercritical alcohol or alcohol-water mixtures. For review, see Wang et al. 2013. This approach has been reported previously only using heavily processed and comparatively pure material such as Kraft lignin from pulp and paper processing, which has been solubilised and partially derivatised, or lignin that was previously extracted using alkali or "organosolv" processes. See e.g. SU997441 [Kraft lignin]; Cheng et al. 2012 [Kraft lignin]; Ye et al. 2012 [lignin extracted from enzymatically hydrolysed corn stover]. In the prior art, substantial reductions in O:C ratio could be obtained using supercritical ethanol solvolysis of lignin residual only where catalysts such as metal oxides, H₂ gas or formic acid were added to the reaction. See Huang et al. 2014 [alkali extracted lignin]; Kleinert and Barth 2008 [alkali extracted lignin]; Kleinert et al. 2011 [alkali and organosolv extracted lignin]; Cheng et al. 2012 [Kraft lignin].

We have discovered that comparatively impure solid lignin residual from a cellulosic ethanol biorefinery process can be directly converted into a substantially diesel-soluble liquid fuel using solvolysis in supercritical ethanol, without requirement for any added catalyst. Adequate yields with reduction of O:C ratios in the product oil to levels beneath 0.25 can be achieved with such a process, provided that the lignin:solvent ratio, water content, reaction temperature and residence times are kept within a comparatively narrow range.

### Brief description of the drawings

Figure 1. Effect of reaction temperature on O:C ratio of product oil.
Figure 2. Effect of reaction temperature on product oil conversion yield.
Figure 3. Effect of reaction period on product oil conversion yield.
Figure 4. Effect of lignin:solvent ratio on product oil conversion yield.
Figure 5. Effect of water content on product oil conversion yield.
Figure 6. Solubility of product oil in marine diesel oil.

### Detailed description of the invention

In some embodiments, the invention provides a process for production of substantially diesel-soluble liquid lignin fuel comprising the steps of:
(i) providing lignin-rich solid residual from lignocellulosic biomass feedstock that has been hydrothermally pre-treated and subsequently subjected to cellulase enzyme hydrolysis,
(ii) subjecting the lignin-rich solid residual to solvolysis in ethanol or methanol in the absence of an effective amount of added catalyst or H₂ gas with water content between 0.1 and 15% by weight and a w/w ratio of solid to solvent of between 0.025 and 0.160 at temperature between 370-420 °C for a period of between 200-280 minutes; and
(iii) recovering liquid product from the solvolysis mixture as a heavy liquid fraction having boiling point above 120 °C remaining after distillation of one or more light fractions,
   wherein the O:C ratio of the recovered heavy liquid fraction is less than 0.25.

In some embodiments, the invention provides a liquid lignin fuel produced by methods of the invention.

In some embodiments, the invention provides a lignin-diesel fuel comprising a blend of diesel oil with between 1 % and 25% by weight of a liquid lignin fuel produced by methods of the invention.

In some embodiments, the invention provides a low-sulphur marine fuel comprising a blend of marine diesel oil (MDO) with between 1 % and 25% by weight of a liquid lignin fuel produced by methods of the invention.

As used herein the following terms have the following meanings:
"Added catalyst" refers to catalyst material other than solvent and lignin residual which is introduced into the solvolysis mixture.
"Catalyst" refers to a substance other than primary solvent which either acts as a hydrogen-donor reactant in hydrogenation of lignin residual during solvolysis, or which catalyses hydrogen-donor activity of the primary solvent. Catalysts may include any one or more of a hydrogen donor co-solvent, or supported or unsupported reduced metal or transition metal oxides. Hydrogen gas (H₂) may also be added either alone or in combination with one or more catalyst as a reactant to improve yields or product properties.
"Conversion yield" refers to the yield of product oil obtained from lignin-rich solid residual determined as the ratio between (mass of heavy liquid fraction recovered) / (mass of dry ash-free added dry matter of lignin residual) x 100 %.
"Diesel oil" refers to a compression ignition fuel well known in the art comprising fractional distillates of petroleum fuel oil.
"Distillation of one or more light fractions" refers to either atmospheric or vacuum heating in such manner as to remove and recover solvent and optionally additional light fractions leaving a heavy fraction or product oil having a boiling point greater than 120 °C, either with or without insoluble solids.
"Effective amount" of "added catalyst or H₂ gas" is a quantity of catalyst alone or in combination with H₂ gas or an amount of H₂ gas alone sufficient to increase conversion yield or decrease O:C ratio of product oil by at least 15% in relative terms compared with the reaction conducted under equivalent conditions in the absence of added catalyst or H₂ gas.
"Hydrothermal preteatment" refers to the use of water, either as hot liquid or pressurized steam, to provide thermal treatment of biomass, at temperatures of 120° C or higher, either with or without addition of acids or other chemicals.
"Lignin-rich solid residual" refers to solids comprising lignin obtained from lignocellulosic biomass that has been hydrothermally pretreated and subject to cellulase hydrolysis which solids have not been previously solubilised or extracted. The term "lignin-rich" refers to a total Klason lignin content of 40% by weight or greater. "Klason lignin content" as well as xylan and glucan content are determined according to the method described by A. Sluiter, et al., "Determination of structural carbohydrates and lignin in biomass," US National Renewable Energy Laboratory (NREL) Laboratory Analytical Procedure (LAP) with issue date April 25, 2008, as described in Technical Report NREL/TP-510-42618, revised April 2008 and refers to material that is insoluble in strong sulphuric acid. Klason lignin content as measured can include both solid, acid insoluble lignin *per se* and also a significant proportion of so-called "pseudo-lignin," which is believed to comprise chemical by-products derived from degradation of biomass feedstock during pretreatment.
"Marine diesel oil" refers to marine fuel oil commonly known in the art, which is typically obtained by mixing heavy oil fraction obtained from atmospheric distillation of crude oil with fractions obtained from secondary crude oil processing.
"O:C ratio" refers to the ratio of oxygen atoms to carbon atoms in product oil components. O:C ratio is measured by determining weight percentages of nitrogen (N), carbon (C) and hydrogen (H) in a tested sample using CHNS-O elemental analysis. The oxygen (O) weight percentage is then assumed to comprise the remaining weight, where sulphur content of the oil is assumed to be negligible. The weight percentages so determined are then corrected to reflect the molar ratios.
"Period" of the solvolysis reaction refers to the residence time of dry matter initially added as lignin residual in the reaction after reaction temperature is achieved until cooling is initiated.
"Ratio of solid to solvent" refers to the weight ratio of ash-free dry matter content of lignin residual and weight of added solvent, and may alternatively be referred to as lignin:solvent ratio. Ash content of lignin residual is determined by burning at 580 °C.
"Soft lignocellulosic biomass" refers to plant biomass other than wood comprising cellulose, hemicellulose and lignin.
"Solubility in marine diesel oil (MDO)" or "solubility in diesel oil" as used herein refers to the percentage by weight of a sample of product oil that dissolves in MDO or diesel oil when blended in a mass ratio of product oil:MDO of 1:9.
"Solvolysis" refers to a chemical reaction in which the solvent is also a reactant. As used herein "solvolysis" is achieved where lignin residual is mixed with ethanol or methanol and heated to the reaction temperature.
"Substantially soluble in marine diesel oil" or "substantially soluble in diesel oil" refers to where at least 65% by weight of a sample of product oil dissolves in a sample of marine diesel oil or diesel oil when blended in a mass ratio of product oil:diesel oil of 1:9.
"Water content" refers to the weight percentage of water in the initial reaction mixture prior to heating, including water content of the solvent and of the lignin rich residual expressed as a percentage of total mass of solvent and solids.

In a lignocellulosic biomass biorefinery, lignin-rich solid residual can be obtained after feedstock has been pretreated and then subjected to cellulase enzyme hydrolysis for conversion of carbohydrate polymers to fermentable sugars.

Notwithstanding some variability in composition of native lignin from different plant species, a wide variety of soft lignocellulosic biomass feedstocks can be used to practice methods of the invention, including at least wheat straw, corn stover, corn cobs, empty fruit bunches, rice straw, oat straw, barley straw, canola straw, rye straw, sorghum, sweet sorghum, soybean stover, switch grass, Bermuda grass and other fuel grasses, sorghum bagasse, sugarcane bagasse, arundo, beet pulp, corn fiber, or any combinations thereof.

The feedstock is first subject to pretreatment so as to improve accessibility of cellulose fibers to productive binding by cellulase enzymes. A variety of different pretreatment schemes have been proposed. For review see Alvira et al. 2010. However, lignin residual suitable for use in methods of the invention can be advantageously obtained from feedstocks subjected to hydrothermal pretreatment. While hydrothermal pretreatment can be conducted in the presence of added acids or bases, these methods are generally less advantageous in producing a suitable lignin residual. Base-supplemented hydrothermal pretreatment leads to a substantial solubilisation of lignin mono- and oligomers, which increases the requirement for de-oxygenation and hydrogenation of the product oil derived from the material. Acid-supplemented or "dilute acid" hydrothermal pretreatment typically involves use of sulphuric acid which promotes sulphonate derivatization of residual lignin, which is undesirable both in terms of sulphur content and also O:C ratio of product oil derived from the material.

In some embodiments hydrothermal pretreatment is conducted at initial pH within the range 4.0 - 9.0. This typically provides a pretreated feedstock which, after enzymatic hydrolysis, will yield a suitable underivatized solid lignin residual having sulphur content less than 0.3% by dry weight.

An often used parameter of hydrothermal pretreatment "severity" is "Ro," which is typically referred to as a log value. Ro reflects a composite measure of pretreatment temperature and reactor residence time according to the equation: Ro= tEXP[T-100/14.75] where t is residence time in minutes and T is reaction temperature in degrees centigrade. In some embodiments, hydrothermal pretreatment is conducted to severity log Ro at least 3.5, or between 3.5 and 4.0, or between 3.8 and 4.2.

The pretreated feedstock is subjected to enzymatic hydrolysis using cellulase enzyme activities according to methods well known in the art. Cellulase hydrolysis may be provided by enzyme-secreting organisms, or through addition of isolated enzyme mixtures. Typically the composition of "cellulase" enzyme mixtures include a variety of different activities, including exoglucanases, endoglucanases, endoxylanases, xylosidases, acetyl xylan esterases and beta glucosidases. Such isolated enzyme mixtures may be prepared on-site or alternatively a commercially available cellulase preparation optimized for lignocellulosic biomass conversion may be used.

Lignin-rich solid residual (hereafter "lignin residual") is typically isolated by a solid-liquid separation step conducted after cellulase hydrolysate of the pretreated feedstock is fermented to produce ethanol or other useful products. When isolated after fermentation, a suitable lignin residual typically has the lowest practicable level of undigested carbohydrate polymers - solid lignin remains associated with some quantity of undigested carbohydrate, such that the combination of glucan and xylan typically comprises between 1% and 25%, or between 2% and 20%, or between 3% and 15% of the lignin residual by weight. In some embodiments, at least 50% by weight of the dry matter content of the lignin-rich solid residual is Klason ligning. The solid-liquid separation step whereby lignin residual is isolated also typically captures, as a contaminant, some quantity of "pseudolignin." Solid-liquid separation can be achieved by any suitable method known in the art including screw press, filter press or drum filter separation, decanting or other methods.

The lignin residual can be isolated after fermentation but before recovery of fermentation products or, alternatively, after recovery of fermentation products by distillation or other means. A typical solid-liquid separation using methods well known in the art can produce a suitable lignin residual having water content between 60 and 70% by weight, or between 45% and 55%, or between 35% and 65%.

Lignin residual can alternatively be obtained after anaerobic digestion of vinasse, which is the slurry remaining after recovery of fermentation products. Anaerobic digestion, which provides wastewater treatment so that biorefinery process water can be re-circulated, typically strips away most biological macromolecules that can be digested by the microbial consortium relied upon. In lignin residual recovered after anaerobic digestion, glucan and xylan content can be reduced to less than 0.2% by weight and "pseudo-lignin" content reduced to the lowest practicable levels.

In some embodiments, lignin residual may be subjected to drying to reduce water content to levels as low as 20% by weight or less or 10% or less or 5% or less.

Quite surprisingly, lignin residual obtained as described can be converted to substantially diesel-soluble oils with conversion yields of 40% or more using ethanol or methanol solvolysis *without added catalyst.* The reasons are not yet clearly understood why catalyst-free alcohol solvolysis can produce substantially diesel-soluble product oils from these lignin residuals: This contradicts the prior art teaching that significant reduction of O:C ratio or significant increase in tetrahydrofuran solubility of liquid product obtained from ethanol solvolysis of lignin requires addition of a catalyst. See Huang et al. 2014; Kleinert and Barth 2008; Kleinert et al. 2011; Cheng et al. 2012.

One skilled in the art will readily determine by routine experimentation appropriate conditions for the solvolysis reaction, depending on the biomass feedstock used and the severity of pretreatment. In some embodiments, conversion yield of lignin-rich residual into product oil is at least 40%. We have determined that this can be achieved, while maintaining an O:C ratio of 0.25 or less in the product oil, provided that parameters of the solvolysis reaction are kept within a comparatively narrow range.

Ye et al. 2012 previously reported ethanol solvolysis to achieve de-polymerisation of organosolv lignin extracted from enzymatically hydrolysed pre-teated corn stalk. They report that liquid product yields are decreased at temperatures above 280°C. We find that, to the contrary, optimal yield of a liquid product having O:C ratio less than 0.25 can be obtained using lignin residual prepared as described herein where ethanol or methanol solvolysis is conducted within the temperature range 370 - 420 °C. O:C ratio of product oil is generally improved at 370 - 420 °C.

The appropriate ratio of lignin residual to solvent can vary within a somewhat broader range. Highest yields of product oil are generally obtained at very low solid:solvent ratio on the order of 0.025:1 weight/weight. However, acceptable conversion yields of 40% or greater of product oil having O:C ratio less than 0.25 can still be obtained where the solid:solvent ratio is as high as 0.160:1. A suitable range of solid:solvent ratio can be between 0.025:1 and 0.160:1, or between 0.03:1 and .05:1. Where water content of the reaction mixture is greater than 8%, it is advantageous to adjust the solid:solvent ratio to within the range 0.025:1 to 0.08:1.

Initial water content of the solvolysis reaction including contributions both from water content of the added solvent and from water content of lignin residual can be between 0.1 % and 15%, or between 0.2% and 12% by weight. Water content can increase during the course of solvolysis, as the dry matter of the lignin residual undergoes dehydration reactions. In some embodiments where comparatively wet residual lignin is used, it is advantageous to adjust the solid:solvent ratio to within the range 0.025:1 to 0.08:1 with initial water content at levels of 12% or less.

The solvolysis reaction using lignin residual prepared as described is surprisingly resilient to problems associated with "slow" heating associated with intermediate formation of radical species at lower temperatures, which are widely known in the biomass pyrolysis art. Heating time from room temperature to reaction temperature can take as long as 60 minutes, or more than 15 minutes, or more than 30 minutes. Similarly cooling of the reaction mixture after completion can be accomplished comparatively slowly, taking as long as 60 minutes to return to room temperature, or more than 15 minutes, or more than 30 minutes. This is advantageous in that it permits use of simple heat exchangers for heating and cooling, rather than more expensive capital equipment which would be required for rapid heating and cooling.

Reaction period for lignin residual prepared as described in the solvolysis reaction advantageously falls within the range 200 to 280 minutes. Product oil conversion yields of 40% or greater can typically be achieved at temperatures between 370 - 420 °C where reaction period is at least 200 minutes.

At the end of the reaction, liquid product oil is recovered from the solvolysis mixture. In some embodiments, the solvolysis mixture is first subject to a solid/liquid separation step such as filtration or centrifugation to separate insoluble solids. These solids typically comprise a mixture of char and ash and typically have considerable heating value as a solid fuel. In some embodiments, solids can be separated from product oil after distillation of one or more light fractions.

The O:C ratio of the product oil obtained as described is less than 0.25. In some embodiments, the O:C ratio of the product oil is reduced by a factor of at least 50% relative to the O:C ratio of the lignin-rich residual used as starting material. In some embodiments, O:C ratio of the product oil is less than 0.21, less than 0.20, or less than 0.19. Ash content of product oil, measured by burning at 800 °C will typically be negligible. Heating values calculated based upon CHNS-O elemental analysis of product oil typically fall within the range 30 to 40 MJ / kg. Sulphur content of product oil is typically not detectable using CHNS-O elemental analysis.

In some embodiments, methods of the invention can be performed as a continuous process.

Product oils obtained using methods of the invention typically have a solubility in diesel oil or marine diesel oil (MDO) of at least 65%. Product oils obtained using methods of the invention can be advantageously blended with diesel oil or MDO at between 1% and 25% by weight in diesel oil or MDO to produce diesel fuel or low-sulphur marine fuel compositions of the invention. In some embodiments, undissolved material is removed from the blended mixture such that the final blend comprises or consists of between 1% and 25%, or between 1% and 18% by weight of the diesel- or MDO-soluble component of the product oil. The percentage of product oil or soluble component of product oil within a blend is calculated as an additive weight % within the solvent diesel or MDO and not as a percentage of total blend weight.

In some embodiments, marine diesel oil used for making low-sulphur marine fuel compositions is a marine distillate fuel meeting the standards specified by the International Organisation for Standardization in ISO-8217, category ISO-F-DMB.

In some embodiments, diesel oil used for making lignin oil-diesel fuel compositions is a distillate fuel meeting the standards specified by the International Organisation for Standardization in ISO 9377-2 and/or ISO 16703.

### Example 1. Properties of lignin-rich residual solid.

Lignin rich solid residual for use in experiments was obtained from enzymatically hydrolysed, pretreated wheat straw. Wheat straw was cut into pieces then water added so that dry matter content was approximately 30-40% by weight during pretreatment. Wetted straw was subject to hydrothermal pretreatment using saturated steam at temperatures of between about 180 and 190 °C for about 15-20 minutes, for severity log Ro between about 3.65 and 3.85. The pretreated straw was then separated into a solid fraction and a liquid fraction using a screw press. The fiber fraction was cooled, pH adjusted to approximately 5.0 and then subject to enzymatic hydrolysis at 50°C for approximately 96 hours using a commercially available cellulase preparation optimised for lignocellulosic biomass conversion. After hydrolysis, the liquefied hydrolysate was subject to fermentation using commercial dry bakers' yeast *(Saccharomyces cerevisiae*) at 37.5 °C for approximately 140 hours. After fermentation ethanol was stripped using a vacuum stripper then concentrated using a rectifying column and a molecular sieve to reach at least 98% ethanol. The bottom product from the distillation column was then separated into a solid fraction and a liquid fraction using a screw press. The solid residual was either dried to a final water content of about 2-5% by weight or used wet with a water content of about 47% by weight. CHO content of the dried material was determined using CHNS-O elemental analysis and found to have the following composition:

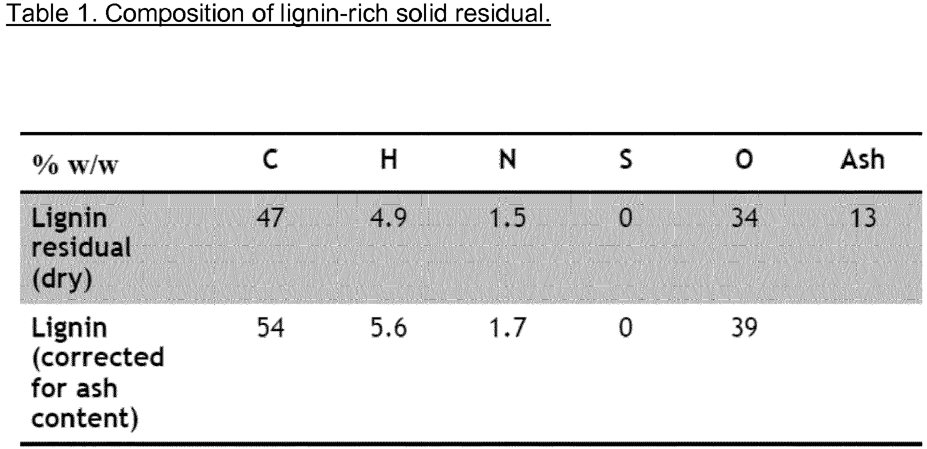

Sulphur content was measured using analytical standard DS/EN/TS 15289 as about 1.3 g / kg. As shown, the lignin-rich solid residual had an initial ash-free O:C ratio of 0.54. It can be shown that at least 50% by weight of the dry matter content of the lignin-rich solid residual is Klason lignin.

### Example 2. Effect of solvolysis temperature on O:C ratio of product oil.

Experiments were conducted in a close sealed Parr reactor with an internal volume of 500 ml. The vessel was stirred during the reaction and heated with an external heating mantel. The reaction was conducted using 10g of dried lignin-rich solid residual sufficient to provide 8.5 g of ash-free dry matter and 100 ml (78.9 g) ethanol (99.9% purity) for a reaction period of 4 h. A non-pressurized inert N₂ atmosphere inside the vessel was ensured prior to heat up. Heat up time varied between 30-70 minutes depending on temperature. Temperature was varied from 300, 350, 400 and 450 °C and the pressure at those conditions was autogenous. After 4 h reaction time the heating mantel was removed and the reaction vessel cooled to room temperature with ice and an internal cooling coil. The pressure was noted and the gas in the reaction vessel emptied into a balloon for analysis. The vessel was opened and its contents filtered in order to separate a liquid fraction from a solid fraction. The liquid fraction was then evaporated (to remove ethanol) at 5 mbar and 45 °C, after which the residual heavy fraction was weighed for determination of oil yield and then subject to CHNS-O elemental analysis.

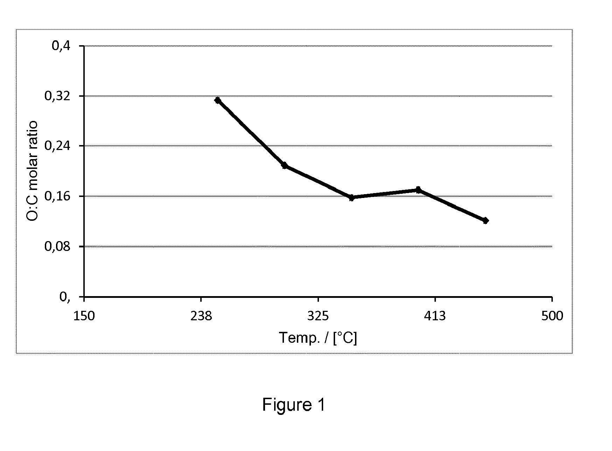

Figure 1 shows the effect of reaction temperature on O:C ratio of product oil. As shown, in the absence of any added catalyst, product oil having an O:C ratio of less than 0.25 can be obtained using ethanol solvolysis of lignin-rich solid residual. Results are improved at temperatures of 350°C and higher. As shown, net reduction in O:C ratio during conversion of lignin-rich residual to product oil was greater than 65% at temperatures of 350 °C or higher.

### Example 3. Effect of solvolysis temperature on product oil yield.

Experiments were conducted as described in example 2. In addition to experiments using 10 g dried lignin-rich solid residual, a parallel set of experiments at the same temperatures was conducted using 2 g dried lignin-rich solid residual (1.7 g ash free dry matter) in 100 ml (78.9 g) ethanol (99.9% pure). The product oil yield was determined as the ratio between (mass of heavy liquid fraction recovered) / (mass of dry ash-free added dry matter) x 100 %.

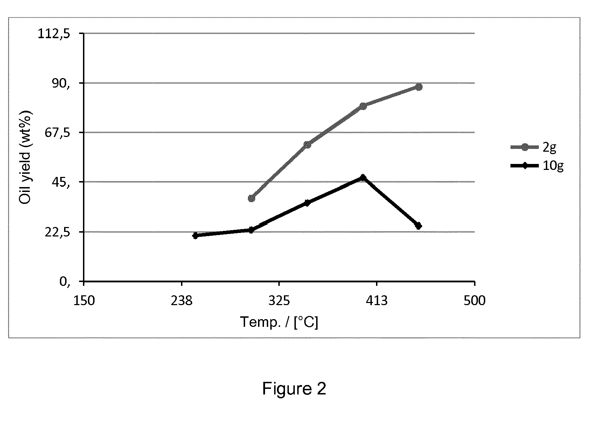

Figure 2 shows the effect of reaction temperature on product oil conversion yield. Data from experiments using 2 g dried lignin-rich residual are shown with filled circles while data from experiments using 10 g dried lignin-rich residual are shown with filled diamonds. As shown, conversion yields are generally improved where less lignin-rich residual is included in the reaction. However, even using higher quantities of material (10g), product oil conversion yields of 40% and greater can typically be achieved at a reaction temperature above 350 °C, particularly at 370 - 400 °C.

### Example 4. Effect of reaction period on product oil yield.

Experiments were conducted as described in example 2 except that temperature was 400 °C and reaction period was varied between 2 and 8 hours. Oil yield was determined as described in example 3.

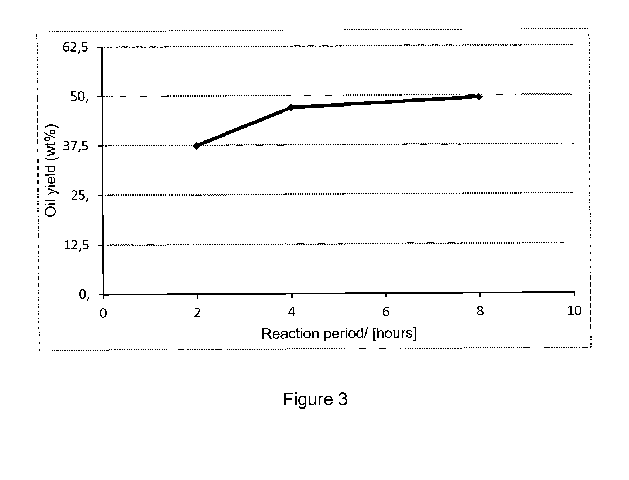

Figure 3 shows effect of reaction period on product oil conversion yield. As shown, 2 hours reaction period is generally not sufficient to achieve conversion yields of 40% or greater, using 10 g ash dried lignin-rich residual at 400 °C. However, 4 hours reaction period is clearly sufficient under these conditions, and reaction periods as short as 3.3 hours (200 minutes) will also give satisfactory results.

### Example 5. Effect of lignin:solvent ratio on product oil yield.

Experiments were conducted at 400°C for 4 hours as described in example 2, except that the volume of solvent was kept fixed to 100 ml (78.9 g) and the amount of added lignin-rich residual was varied between 2 g - 40 g (1.7 g - 34 g ash-free dry matter). Oil yield was determined as described in example 3.

The specific ratios of solid:solvent tested were as follows: 2.0 g dried lignin-rich residual (1.7 g ash free dry matter) in 78.9 g ethanol = 0.022; 5 g dried lignin-rich residual (4.25 g ash free dry matter) in 78.9 g ethanol = 0.054; 10 g dried lignin-rich residual (8.5 g ash free dry matter) in 78.9 g ethanol = 0.108; 20 g dried lignin-rich residual (17.0 g ash free dry matter) in 78.9 g ethanol = 0.215; 40 g dried lignin-rich residual (34.0 g ash free dry matter) in 78.9 g ethanol = 0.431.

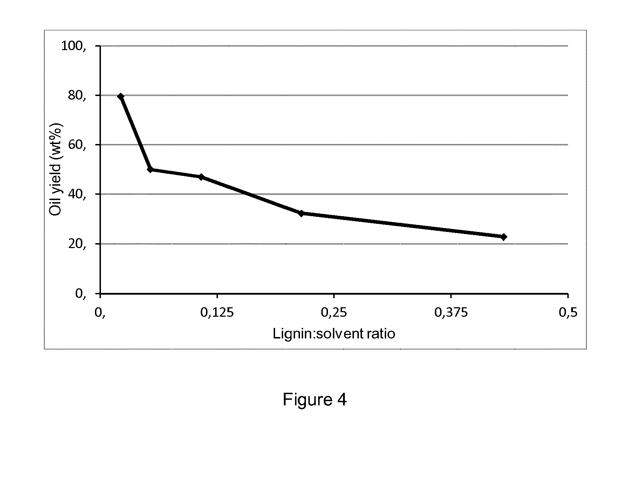

Figure 4 shows effect of lignin:solvent ratio (ratio of ash free dry matter mass added to mass 99.9% pure ethanol added) on product oil conversion yield. As shown, conversion yields of 40% or greater can be achieved under these conditions at a ratio of solid to solvent well above 0.125, to approximately 0.160.

### Example 6. Effect of water content on product oil yield.

Experiments were conducted at 400 °C for 4 hours as described in example 2, except that the quantity of lignin-rich residual, ethanol and water added were varied. Experiments were conducted using a quantity of lignin-rich residual sufficient to provide 8.5 g ash free dry matter. The quantity of water and ethanol added was varied between 5 ml water with 95 ml ethanol, 10 ml water with 90 ml ethanol, and 50 ml water with 50 ml ethanol.

The specific water contents (as % by weight) were calculated based on 2% water content in the lignin-rich residual. The following specific water content values were tested: The corresponding lignin:ethanol ratios (ratio of ash free dry matter mass added to ethanol mass added) respectively were 0.108; 0.113; 0.120; 0.215.

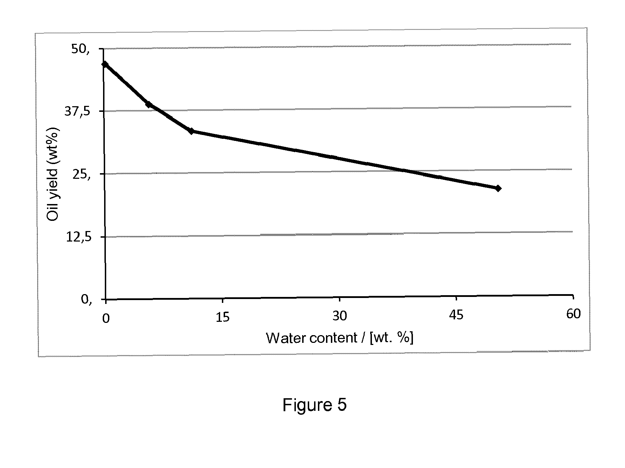

Figure 5 shows effect of water content on product oil conversion yield. As shown, water content has a deleterious effect on product oil yield. While 40% conversion yield is difficult to achieve under these tested conditions in the presence of appreciable water content, it can be shown that 40% yields can be achieved with water content as high as 12% by using a somewhat lowered ratio of solid to solvent within the range 0.025:1 and 0.08:1 in the reaction mixture. Any of the experiments described in examples 2 through 6 can be conducted using methanol as solvent.

### Example 7. Addition of an effective amount of catalyst.

Experiments were conducted for 4 hours at 400 °C as described in example 2, except that a quantity of lignin-rich residual sufficient to provide 8.5 g ash free dry matter was used either in the presence or absence of added catalyst. Oil yields were determined as described in example 3. In experiment with no added catalyst, reaction heat-up to temperature was conducted in a non-pressurised inert N₂ atmosphere. In experiments with added H₂, the vessel was pressurised with 40 bar hydrogen prior to heat-up. In experiments with addition of solid catalyst 4g was added of 5wt% Ni/Al₂O₃. The catalyst was prepared from nickel nitrate in a known aqueous concentration poured over alumina powder followed by oven drying at 70°C for 24 hours. The catalyst was simultaneously calcined and reduced at 500°C for 1 hour under a continuous flow of 1 L/min Hydrogen inside the reaction vessel used for the batch experiments. O:C ratio of the product oil was determined using CHNS-O elemental analysis. O:C ratio of the product oil obtained in the absence of added catalyst was 0.170. In the presence of 4g 5wt% Ni/Al₂O₃ added catalyst without added H₂, the O:C ratio of the product oil was 0.133, or approximately a 22% relative improvement. In the presence of both 4g 5wt% Ni/Al₂O₃ added catalyst and also added H₂, the O:C ratio of the product oil was 0.125, or approximately a 26% relative improvement.

### Example 8. Solubility in Marine Diesel Oil.

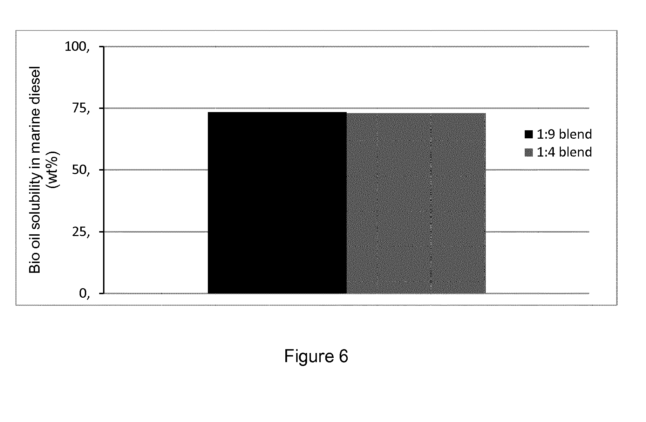

Lignin oil produced by solvolysis at 400 °C for 4 h with a quantity of lignin-rich residual sufficient to provide 8.5 g ash free dry matter in 100 ml ethanol (99.9% pure) was used for solubility experiments. An amount of oil about 50 mg was placed in a weighed EPPENDORF (Tm) tube, the tube reweighed to determine precise oil weight and then an appropriate quantity of marine diesel oil (MDO) (about 650 µl) was added to the tube to provide a blend of product oil in MDO of either 1:4 or 1:9 by weight, i.e. a lignin oil-diesel blend initially comprising 25% or 11.1% by weight product oil in marine diesel. The mixture was sonicated for 15 min and then centrifuged for 5 min at 12,000 rpm after which the marine diesel fraction was removed and an undissolved fraction was washed with heptane. The EPPENDORF(Tm) tube with the undissolved fraction was dried at room temperature under vacuum and then weighed to determine the total weight of product oil which was soluble in MDO. Figure 6 shows the solubility of product oil in marine diesel oil for blend ratio 1:4 and 1:9 expressed as a percentage by weight of added product oil which dissolved. Surprisingly, approximately 73% by weight of the blended product oil could be dissolved in MDO regardless of whether the blend ratio was 1:4 or 1:9. The final lignin-oil diesel blend after removal of undissolved material comprised about 18.3% or 8.1% by weight of product oil in MDO where the initial blend ratio was 1:4 or 1:9 respectively.

The embodiments and examples herein are descriptive only and not intended to limit the scope of the invention as defined by the claims.

### References

Lehto, J. et al., "Review of fuel oil quality and combustion of fast pyrolysis bio-oils from lignocellulosic biomass," Applied Energy 116 (2014) 178-190
Martin, J. et al., "Maximizing the Stability of Pyrolysis Oil/Diesel Fuel Emulsions," Energy Fuels 28 (2014) 5918-5929
Alcala, A. and Bridgwater, A., "Upgrading fast pyrolysis liquids: Blends of bio-diesel and pyrolysis oil," Fuel 109 (2013) 417-426
Yaginuma, R. et al., "Homogenizing effect of ethers added to immiscible methanol/oil binary mixtures," SEKIYU GAKKAISHI-JOURNAL OF THE JAPAN PETROLEUM INSTITUTE 44(6) (2001) 401-406
Aysu, T. et al., "Liquefaction of Typha latifolia by supercritical fluid extraction," Bioresource Technology 107 (2012) 464-470
Huang, H. et al.,"Therm°Chemical liquefaction of rice husk for bio-oil production with sub- and supercritical ethanol as solvent," Journal of Analytical and Applied Pyrolysis 102 (2013) 60-67
Wang, X. et al., "Depolymerization of lignin with supercritical fluids: a review," Advanced Materials Research 821-822 (2013) 1126-1134
Cheng, S. et al., "Hydrothermal degradation of alkali lignin to bio-phenolic commpounds in sub/supercritical ethanol and water-ethanol co-solvent," Polymer Degradation and Stability 97 (2012) 839-848
Ye, Y., et al., "Novel method for production of phenolics by combining lignin extraction with lignin depolymerization in aqueous ethanol," Ind. Eng. Chem. Res. 51 (2012) 103-110
Huang, X. et al., "Catalytic depolymerization of lignin in supercritical ethanol," Chem Sus Chem 7 (2014) 2276-2288
Kleinert, M. and Barth, T. "Towards a lignincellulosic biorefinery: Direct one-step conversion of lignin to hydrogen-enriched biofuel," Energy & Fuels 22 (2008) 1371-1379
Kleinert, M. et al., "Developing solvolytic conversion of lignin-to-liquid (LtL) fuel components: Optimization of quality and process factors," Cellulose Chem. Technol. 1-2 (2011) 3-12
Alvira, P., et al. "Pretreatment technologies for an efficient bioethanol production process based on enzymatic hydrolysis: A review", Bioresource Technology (2010) 101:4851

## Claims

1. A process for production of substantially diesel-soluble liquid lignin fuel comprising the steps of:
(i) providing lignin-rich solid residual from lignocellulosic biomass feedstock that has been hydrothermally pre-treated and subsequently subjected to cellulase enzyme hydrolysis,
(ii) subjecting the lignin-rich solid residual to solvolysis in ethanol or methanol in the absence of an effective amount of added catalyst or H₂ gas with water content between 0.1 and 15% by weight and a w/w ratio of solid to solvent of between 0.025 and 0.160 at temperature between 370-420 °C for a period of between 200-280 minutes; and
(iii) recovering liquid product from the solvolysis mixture as a heavy liquid fraction having boiling point above 120 °C remaining after distillation of one or more light fractions,
wherein the O:C ratio of the recovered heavy liquid fraction is less than 0.25.

2. The process of claim 1 wherein the lignocellulosic biomass feedstock was pre-treated to severity of at least log Ro 3.5 at initial pH between 4 and 9.

3. The process of claim 1 wherein conversion yield of heavy liquid fraction is at least 40% by weight of the ash free dry matter content of added lignin-rich solid residual.

4. The process of claim 1 wherein water content of the lignin-rich solid residual is between 35 and 65% by weight.

5. The process of claim 1 wherein sulphur content of the lignin-rich solid residual is less than 0.3% by weight.

6. The process of claim 1 wherein solvolysis at temperature between 370-420 °C is achieved after a heating time from room temperature to reaction temperature of at least 30 minutes.

7. The process of claim 1 wherein the O:C ratio of the recovered heavy liquid fraction is at least 50% less than the O:C ratio of the lignin-rich solid residual corrected for ash content.

8. The process of claim 1 conducted as a continuous process.

9. The process of claim 1 wherein the lignin-rich solid residual was recovered after recovery of fermentation products from fermentation of hydrolysed pretreated biomass feedstock.

10. The process of claim 1 wherein the lignin-rich solid residual was recovered after anaerobic digestion of vinasse remaining after recovery of fermentation products from fermentation of hydrolysed pretreated biomass feedstock.

11. A liquid lignin fuel produced by the process of claim 1.

12. A lignin-diesel liquid fuel comprising diesel oil or marine diesel oil (MDO) to which has been added between 1 % and 25% by weight of a liquid lignin fuel produced by the process of claim 1.

13. The lignin-diesel liquid fuel of claim 12 comprising diesel oil or marine diesel oil (MDO) to which has been added between 1 % and 25% by weight of the diesel- or MDO-soluble component of a liquid lignin fuel produced by the process of claim 1.

14. A process for production of lignin-diesel liquid fuel comprising the steps of blending diesel oil or marine diesel oil (MDO) with between 1% and 25% by weight of a liquid lignin fuel produced by the process of claim 1.

15. The process of claim 14 further comprising the step of removing undissolved components from the blended mixture.
